# EUROPÄISCHE PATENTSCHRIFT

(11) **EP 3 846 666 B1**
(45) Veröffentlichungstag und Bekanntmachung des Hinweises auf die Patenterteilung: **01.11.2023**
(21) Anmeldenummer: 19759316.3
(22) Anmeldetag: 20.08.2019
(51) Int. Cl.: A47J 31/44

(54) **VERFAHREN UND VORRICHTUNG ZUM ERZEUGEN VON MILCH-LUFT-EMULSIONEN**
METHOD AND DEVICE FOR PRODUCING MILK-AIR EMULSIONS
PROCÉDÉ ET DISPOSITIF DE PRODUCTION D'ÉMULSIONS AIR/LAIT

(30) Priorität: 04.09.2018 DE 102018121567
(43) Veröffentlichungstag der Anmeldung: 14.07.2021
(73) Patentinhaber: Melitta Professional Coffee Solutions GmbH & Co. KG, 32429 Minden (DE)
(72) Erfinder: DIESTER, Thomas, 31675 Bückeburg (DE); BUCHHOLZ, Bernd, 32369 Rahden (DE)
(74) Vertreter: Specht, Peter
(86) Internationale Anmeldenummer: PCT/EP2019/072234
(87) Internationale Veröffentlichungsnummer: WO 2020/048765

(56) Entgegenhaltungen:
- EP-A1- 3 181 021
- EP-A1- 3 222 178
- EP-A1- 3 260 025
- DE-A1-102016 123 655

## Beschreibung

Die Erfindung betrifft ein Verfahren zum Erzeugen von Milch-Luft-Emulsionen, vorzugsweise von Milchschäumen.

Bei der Herstellung von milchhaltigen Getränken mit Milchschäumen können unterschiedliche Qualitäten von Milchschäumen den Geschmack des Getränks und die optische Erscheinung des Getränks deutlich beeinflussen. Hierzu wurden seitens der Anmelderin bereits einige Verbesserungen an einer Vorrichtung zur Herstellung von Milchschäumen vorgenommen.

Die DE 10 2014 105 108 A1 offenbart z.B. einen Homogenisator, welcher eine Optimierung des Milchschaumes aufgrund von Prallkörpern vornimmt, auf welche der Milchschaum trifft.

Die DE 10 2014 112 178 A1 offenbart ein Luftzuführsystem mit einer Ansaugvorrichtung für Luft und eine Drossel zur gezielten Abgabe von Luft in Milch mit dem Ziel einer automatisierten Aufschäumung dieser Milch.

Einen gattungsgemäßen Stand der Technik offenbart die CH 705 720 A2, in welcher vorgeschlagen wird, Milchschaum - also eine Milch-Luft-Emulsion - in Abhängigkeit von der ermittelten Produkttemperatur zu erzeugen.

Bekannt ist darüber hinaus, dass die Eigenschaften des Milchschaums und Funktion des Milchsystems im entscheidenden Maße von der der Milch zugeführten Luftmenge abhängig sind. Die optimale Luftzugabe ist dabei im Wesentlichen abhängig von dem herzustellenden Milchschaumprodukt (Heißmilchschaum, Kaltmilchschaum, Top Foam) der Milchtemperatur, der Milchsorte, der Ansaughöhe und den kundenspezifischen Anforderungen.

Bei herkömmlichen Systemen muss die Luftmenge für das jeweilige Milchschaumprodukt manuell auf die Einflussfaktoren abgestimmt und anschließend auf die kundenspezifischen Anforderungen angepasst werden. Die Einstellung erfolgt durch den Kundendiensttechniker, welcher mit der Trial-and-Error-Methode die Luftzugabe ändert bis der optimale Einstellbereich abschätzbar ist und anschließend in diesem Bereich den Schaum auf die Kundewünsche anpasst. Der Zeitaufwand und Milchverlust können bei diesem Vorgehen, in Abhängigkeit der vorherrschenden Bedingungen und gestellten Anforderungen, hoch sein.

Die DE 10 2017 113 832 A1 offenbart zudem ein Verfahren, mit dem Milch-Luft-Emulsionen, insbesondere Milchschäume, mit einer Vorrichtung zum Erzeugen eines Milchschaums hergestellt werden wobei das Verfahren zumindest folgende Schritte aufweist: A) Ermitteln der physikalischen Stoffeigenschaft der Milch-Luft-Emulsion durch zumindest die erste Messeinheit; B) Durchführen eines Vergleiches mit der Steuerungs- und Auswerteeinheit zwischen einem Ist-Wert und einem Sollwertbereich dieser physikalischen Stoffeigenschaft, wobei die Steuerungs- und Auswerteeinheit einen Datenspeicher nutzt, auf welchem Datensätze von Sollwerten und/oder Sollwertbereichen in Abhängigkeit von der Temperatur und/oder einem gewünschten milchhaltigen Getränk und/oder einer zugeführten Milchsorte hinterlegt sind, C) wobei, sofern der Istwert außerhalb des Sollwertbereiches liegt, mit der Steuerungs- und Auswerteeinheit ein Einstellen zumindest einer Stellgröße im Verfahren erfolgt, derart, dass die physikalische Stoffeigenschaft beeinflusst wird. Dieses Verfahren hat sich an sich bewährt, kann aber zu einer Regelung während des jeweiligen Bezuges führen, was wiederum die Menge an erzeugtem Milchschaum während des Bezuges verändern kann.

Aus der EP 3 260 025 A1 ist ferner ein Verfahren mit den Merkmalen a) bis h) des Anspruchs 1 bekannt.

Die Erfindung hat die Aufgabe, ein Verfahren zum Betrieb eines Gerätes zum Erzeugen von Milch-Luft-Emulsionen bereitzustellen, welches in der Lage ist eine Anpassung eines Einstellungsbereichs bei Änderungen von Materialparametern der Milch oder von Prozessparametern für die Herstellung der Milch-Luft-Emulsionen bereitzustellen.

Die Erfindung löst diese Aufgabe durch ein Verfahren mit den Merkmalen des Anspruchs 1.

Ein erfindungsgemäßes Verfahren zur Herstellung von Milch-Luft-Emulsionen, insbesondere von Milchschäumen, wird mit einem Gerät zum Bereitstellen einer Milch-Luft-Emulsion (MLE) realisiert.

Anspruch 1 schafft ein Verfahren zum Betrieb eines Geräts zum Bereitstellen einer Milch-Luft-Emulsion (MLE) wobei das Gerät zumindest aufweist: eine von Milch durchflossene Milchleitung, wenigstens ein Luftzuführsystem mit einer Stelleinheit zur Einstellung einer Luftzufuhrmenge zur Erzeugung einer Milch-Luft-Emulsion (MLE) aus der Milch (M), zumindest eine Messeinheit zur Ermittlung wenigstens einer physikalischen Stoffeigenschaft der Milch-Luft-Emulsion (MLE), und eine Steuerungs- und Auswerteeinheit, welche ausgerüstet ist zur Einstellung wenigstens einer Steuergröße, wobei die Vorrichtung zumindest zwei Betriebsmodi aufweist, wobei in einem ersten Betriebsmodus eine Ausgabe einer Milch-Luft-Emulsion (MLE) erfolgt, wobei in dem ersten Betriebsmodus eine Zugabemenge an Luft in eine zugeführte Milch eingeleitet wird, wobei die Steuerungs- und Auswerteeinheit die Luftzugabemenge anhand eines Datensatzes einstellt, der beim Durchlaufen eines zweiten Betriebsmodus festgelegt worden ist, wobei in dem zweiten Betriebsmodus im Rahmen einer Selbstjustierung ein Erstellen des Datensatzes unter Änderung der physikalischen Stoffeigenschaft durch Ändern der zugeführten Luftmenge durch die Stelleinheit erfolgt ist, wobei das Gerät im ersten Betriebsmodus eine Ausgabe eines Getränks mit einer Milch-Luft-Emulsion ermöglicht, durch Ausführen der folgenden Schritte: A) Vorgabe einer Milch-Luft-Emulsion (MLE) anhand einer manuellen Auswahl eines Getränks;B) Ausführen des ersten Betriebsmodus unter Freischalten eines Bedienfeldes zur Sollwerteinstellung der Luftmenge innerhalb des Sollwertbereichs; und C) Ausgabe des Getränks mit der Milch-Luft-Emulsion (MLE).

Die Steuerungs- und Auswerteeinheit ist ausgerüstet zur Einstellung einer Steuergröße, z.B. des Öffnungsgrades einer Drossel, insbesondere eines Luftdrosselventils, anhand der physikalischen Stoffeigenschaft der Milch-Luft-Emulsion, wobei die Steuerungs- und Auswerteeinheit einen Datenspeicher aufweist, auf welchem Datensätze zumindest eines Sollwerts der physikalischen Stoffeigenschaft einer Milch-Luft-Emulsion in Abhängigkeit von einer Temperatur der Milch-Luft-Emulsion hinterlegt sind.

Entsprechend kann zeitgleich zum messtechnischen Erfassen der physikalischen Stoffeigenschaft auch ein Erfassen der Temperatur z.B. durch einen Temperatursensor erfolgen.

In einem ersten Betriebsmodus der erfindungsgemäßen Vorrichtung erfolgt eine Ausgabe einer Milch-Luft-Emulsion. In dem ersten Betriebsmodus erfolgt die Einstellung der Zugabemenge an Luft in eine zugeführte Milch anhand des vorgespeicherten Datensatzes, der im zweiten Betriebsmodus erzeugt worden ist.

Die Zugabemenge kann insbesondere durch den Öffnungsgrad einer Drossel des Luftzuführsystems eingestellt werden. Diese Zugabemenge bzw. der Öffnungsgrad befindet sich innerhalb eines festgesetzten Sollwertbereichs.

Der festgelegte Sollwertbereich ist ausgesucht aus einem hinterlegten Datensatz der Steuergröße einer Stelleinheit, also z.B. dem Öffnungsgrad der Drossel, welcher sich bei der Zugabemenge an Luft ändert. Der Datensatz kann als ein Verlaufsdiagramm "z.B. Öffnungsgrad gegenüber Leitfähigkeit bei konstanter Temperatur T1" ausgebildet sein.

Der Öffnungsgrad und damit auch die zugeführte Luftmenge können in Abhängigkeit der physikalischen Stoffeigenschaft, z.B. der elektrischen Leitfähigkeit, eingestellt werden.

In dem zweiten Betriebsmodus erfolgt im Rahmen einer Selbstjustierung ein Erstellen des Datensatzes, insbesondere nach Art eines Werte-Datensatzes, der nach Art eines Verlaufsdiagramms darstellbar ist.

Zur Selbstjustierung werden durch die Vorrichtung selbst durch Spülen der Vorrichtung mit Milch und durch Vorkühlung mit Milch vereinbarte bzw. vorgegebene Referenzbedingungen geschaffen.

Danach wird der geeignete Sollwertbereich ermittelt, innerhalb welchem eine manuelle Einstellung durch den Nutzer für jede Einzelzubereitung eines Getränks insbesondere im Rahmen des ersten Betriebsmodus erfolgen kann.

Innerhalb des ersten Betriebsmodus muss vorzugsweise keine Ermittlung der Leitfähigkeit oder der Temperatur des Milchschaums erfolgen. Es erfolgt vielmehr lediglich noch eine Steuerung bzw. eine Einstellung der Vorrichtung zur Erzeugung des jeweiligen Milchschaumes. So wird der optimale Grad an Luftzufuhr (zur Schaumerzeugung) und/oder Dampf (zur Temperatureinstellung) für die jeweilige Milchsorte anhand der Parameter eingestellt, die im zweiten Betriebsmodus ermittelt worden sind. Der zweite Betriebsmodus entspricht somit einer Art Eichung der Vorrichtung auf eine jeweilige Milchsorte. Dabei kann der Nutzer diese Eichung vorzugweise selbst ohne Servicetechniker durchführen. Bei einem Wechsel der Milchsorte kann er die Eichung für die neue Milchsorte wiederholen. Im laufenden Bezug erfolgt dann lediglich eine Steuerung anhand der vorher ermittelten Parameter.

Die Selbstjustierung im zweiten Betriebsmodus ermöglicht dabei eine Ermittlung eines unter Referenzbedingungen optimalen Sollwertbereichs.

Eine Justierung ist zu unterscheiden von der Kalibrierung, welche lediglich ein Einmessen ist. Die Justierung wird durch Messungen und vorzugsweise einen Vergleich mit vorgespeicherten Daten sowie ggf. unter Änderung der Daten vorgenommen, so dass die voreingestellten Softwaredaten angepasst werden.

Eine Selbstjustierung kann auch bei einem Austausch verschiedener Baueinheiten der erfindungsgemäßen Vorrichtung, z.B. der Luftzuführeinheit, vorgenommen werden. Und auch bei dem bereits angesprochenen Wechsel der Milchsorte, kann ein Selbstjustierungsvorgang ausgelöst werden.

Das Auslösen der Selbstjustierung, also das Umschalten vom ersten Betriebsmodus in den zweiten Betriebsmodus, kann durch eine Überwachung initiiert werden und automatisch erfolgen. Sie kann aber - und dies ist besonders bevorzugt - auch manuell ausgelöst werden, beispielsweise durch Start eines entsprechenden Selbstjustierungsprogrammes durch Auswahl eines Menüpunktes an einem Auswahlmenü der Steuerungsvorrichtung der Vorrichtung.

Denkbar ist auch, dass ein Wechsel der Milchsorte oder ein Wechsel einer Baueinheit z.B. durch ein RFID-System erkannt wird und eine Selbstjustierung auslöst oder dass eine Selbstjustierung bei erstmaliger Inbetriebnahme unter geänderten Bedingungen initiiert wird.

Die Selbstjustierung kann allerdings auch manuell ausgelöst werden, z.B. durch einen Techniker oder durch einen Nutzer. Besondere technische Erfahrung ist dabei vorzugsweise nicht nötig, da die Vorrichtung im Anschluss an die Initiierung des zweiten Betriebsmodus sämtliche Verfahrensschritte bevorzugt eigenständig ausführt.

Das Verfahren zur Zubereitung einer Milch-Luft-Emulsion umfasst daher zumindest zwei Betriebsmodi. Ein Betriebsmodus kann dabei der Milchschaumzubereitung im Sinne einer Getränkeausgabe oder Getränkezugabe dienen. Der zweite Betriebsmodus wird hingegen ausgeführt, wenn kein Bezug an Milchschaum im Rahmen einer Getränkezubereitung benötigt wird. Er kann z.B. bei Änderung einer Milchsorte aktiviert werden, beispielsweise nach mehreren Wochen, Monaten oder sogar Jahren.

Die Milchschaumzubereitung im ersten Betriebsmodus weist dabei die folgenden Schritte auf:
Schritt A: Vorgabe einer Milch-Luft-Emulsion anhand einer manuellen Auswahl eines Getränks. Die Vorgabe kann z.B. durch Auswahl des Getränkes "Cappuccino" erfolgen. Die Auswahl des Getränkes gibt dem Gerät vor, dass zumindest ein Top Foam, also ein im Wesentlichen auf einem Kaffee aufschwimmender Milchschaum benötigt wird. Die Erzeugung des entsprechend benötigten Milchschaums kann anhand von Einstellungen, die in dem zweiten Betriebsmodus durch die Selbstjustierung ermittelt wurde, für das spezifische Milchschaum-Produkt erfolgen.
Schritt B: Ausführen des ersten Betriebsmodus. Wird für ein ausgewähltes Produkt an einem Getränkeautomaten, z.B. an einem Kaffeevollautomaten, eine Milch-Luft-Emulsion benötigt, kann optional einmalig bei einem Bezug oder aber auch wiederkehrend ein Bedienfeld freigeschaltet werden. Dieses Bedienfeld gibt dem Nutzer vorzugsweise die optimale Sollwerteinstellung für die Milch-Luft-Emulsion an und ermöglicht es dem Nutzer die Zusammensetzung der Emulsion durch Zuleitung von mehr oder weniger Luft innerhalb des durch Selbstjustierung voreingestellten Sollwertbereichs zu variieren. Diese Option kann einmalig nach einer Selbstjustierung durchlaufen werden oder jedes Mal vor einer Getränkeausgabe. Dabei wird der Sollwertbereich anhand des im zweiten Betriebsmodus ermittelten bzw. angepassten Datensatzes eingestellt.
Schritt C: Ausgabe des Getränks mit der Milch-Luft-Emulsion. Dabei entspricht die Milch-Luft-Emulsion in ihrer Zusammensetzung der vom Nutzer im Bedienfeld eingestellten Zusammensetzung. Somit wird dem Nutzer über das Bedienfeld die Möglichkeit der Einstellung gegeben, ohne dass eine Zusammensetzung (90% Milch oder 90% Luft) auswählbar ist, die weit jenseits einer optimalen Zusammensetzung ist. Zudem wird der Nutzer über die optimale Zusammensetzung eines Milchschaumes, welcher durch die Selbstjustierung nunmehr vorzugsweise unabhängig von der Milchsorte ist, informiert und er kann nach "Gefühl" einstellen, ob er gegenüber dem als optimal vorgegebenen Produkt einen dichteren oder "lockereren bzw. fluffigeren" Milchschaum bevorzugt.

Der Datensatz kann vorteilhaft als ein Verlaufsdiagramm bzw. Verlaufsdatensatz zum Verlauf der physikalischen Stoffeigenschaft in Abhängigkeit von der Luftzufuhr, also zum Beispiel in Abhängigkeit des Öffnungsgrades einer Drossel des Luftzuführsystems, und/oder der Milchschaum- und/oder Milchtemperatur ausgebildet sein, also als eine Datensatz bzw. als eine Wertefunktion, die von einer oder mehreren Variablen - Luftzufuhr und/oder Temperatur und ggf. weitere Variablen - abhängt.

Der zweite Betriebsmodus kann besonders bevorzugt zumindest die folgenden Schritte aufweisen:
i) Analyse einer zugeführten Milch zumindest anhand der physikalischen Stoffeigenschaft;
ii) wiederholtes Ausbilden einer Mich-Luft-Emulsion unter Veränderung einer in die Milch eingeleiteten Luftmenge bei gleichzeitiger Ermittlung der Änderung bzw. des jeweiligen Wertes der physikalischen Stoffeigenschaft; und
iii) Erstellen des Verlaufsdiagramms für die physikalische Stoffeigenschaft in Abhängigkeit von der in Schritt ii) eingestellten Luftmenge.

Die eingeleitete Luftmenge in Schritt ii) kann bei Verwendung eines Luftansaugsystems mit einer einstellbaren Drossel indirekt über einen Öffnungsgrad der Drossel ausgedrückt werden. Die Luftmenge bzw. der Öffnungsgrad wird insbesondere zur Erstellung des Datensatzes ausgehend von einem Startwert nach und nach erhöht oder verringert.

Die Selbstjustierung ist insbesondere als ein Verfahren zur automatischen selbständigen Ermittlung eines oder mehrerer Steuerungsparameter, insbesondere der Luftzugabemenge, bei der Erzeugung eines Milchschaumes zu verstehen. Dieses Verfahren kann als ein vollständig selbständig durchgeführtes Verfahren bzw. ein selbständig durchgeführter Vorgang durchgeführt werden. Es kann z.B. auch bei Inbetriebnahme der Vorrichtung erfolgen und/oder manuell gestartet werden. Die optimale Luftzugabemenge für das jeweilige Milchschaumprodukt kann dabei Milchspezifisch und schaumspezifisch automatisch ermittelt und als Datensatz hinterlegt werden. Dieser Datensatz wird dann automatisch oder ggf. nach Anpassungen durch den Nutzer im ersten Betriebsmodus für die Steuerung benutzt.

Eine Vielzahl von physikalischen Stoffeigenschaften sind abhängig von Referenzbedingungen bei deren messtechnischer Erfassung bzw. Ermittlung. Eine wichtige Referenzbedingung ist die Temperatur der Milch bzw. der Luft-Milch-Emulsion z.B. bei der Ermittlung der elektr. Leitfähigkeit.

Es ist daher von Vorteil, wenn die Ermittlung der physikalischen Stoffeigenschaft in Schritt ii) in Abhängigkeit von der Temperatur der Luft-Milch-Emulsion erfolgt. Sofern eine Temperaturänderung bei einer schrittweisen Änderung der Luft bzw. bei der Änderung des Öffnungsgrades der Drossel eintritt, so kann anhand eines hinterlegten Temperatur-Leitfähigkeits-Datensatzes eine Temperaturkompensation während des Erstellens des Datensatzes vorgenommen werden.

Es ist zudem von Vorteil, wenn die Zuleitung der Luftmenge über eine Drossel, vorzugsweise durch ein motorisch stufenlos-einstellbares Luftdrosselventil, erfolgt, welche durch Einstellung des Sollwertbereichs steuerbar ist, wobei die Luftmenge anhand des Öffnungsgrades der Drossel im Verlaufsdiagramm angegeben wird. Die Drossel ist dabei insbesondere Teil des Luftzuführsystems.

Vor der Analyse der zugeführten Milch kann eine Spülung der Vorrichtung mit der Milch zur Reinigung und/oder zur Vorkühlung einzelner Bauteile der Vorrichtung erfolgen. Diese Schaffung von Referenzbedingungen kann gemeinsam mit der Analyse der zugeführten Milch ein Verfahrensschritt bei der Selbstjustierung darstellen.

Als physikalische Stoffeigenschaft können vorteilhaft die elektrische Leitfähigkeit und/oder eine optische Materialeigenschaft, insbesondere der Brechungsindex, genutzt werden. Somit kann das Messen und Beurteilung des Milch/Schaum-Verhältnisses anhand der elektr. Leitfähigkeit oder anhand der Brechzahl (BRIX) erfolgen.

Der Wechsel zwischen dem ersten und dem zweiten Betriebsmodus kann vorteilhaft durch ein manuelles Umschalten erfolgen, vorzugsweise durch ein zugangsgeschützes Justiermenü oder als Ergebnis einer Überwachung ausgelöst werden.

Das zugangsgeschützte Justiermenü kann z.B. ausschließlich durch einen Techniker oder einen bestimmten Nutzer per Passwort, RFID oder anderen Schlüsselsystemen freigeschalten und bedient werden.

Die Analyse der in Schritt i) zugeführten Milch kann anhand einer Milchsortendatenbank erfolgen, wobei verschiedene Milchsorten z.B. nach Hersteller und/oder nach Fettgehalt oder anderer Parameter wie z.B. Lactosefreiheit als Datensatz auf dem Datenspeicher der Steuerungs- und Auswerteeinheit in Abhängigkeit von der physikalischen Stoffeinheit, z.B. Leitfähigkeit, und/oder physikalischen Eigenschaften wie z.B. der Temperatur der Milch, hinterlegt sind.

Anhand dieser Milchsortendatenbank kann eine Redundanzprüfung der Milchanalyse in Schritt i) durchgeführt werden und/oder eine Überwachung der Milchsorte erfolgen, wobei eine Änderung der Milchsorte zu einer Initiierung des zweiten Betriebsmodus führen kann.

Weiterhin kann je nach Milchsorte ein anderer optimaler Sollwertbereich gewählt werden.

Durch den zweiten Betriebsmodus wird auch eine automatische Miteinbeziehung sekundärer/passiver Einflussfaktoren auf die Schaumeigenschaften (geodätische Ansaughöhe, Milchtemperatur, Leitungslänge, Milchsorte und Milchart) und die entsprechende Kompensation dieser durch die Luftzugabemenge möglich bzw. realisiert.

Insgesamt ergibt sich erfindungsgemäß durch den zweiten Betriebsmodus auch eine sehr vorteilhafte Möglichkeit zur Reaktion auf geänderte Bedingungen (Milchsorte, Milchtemperatur o.ä.) durch den Anwender oder - per Fernwartung.

Im Rahmen der vorliegenden Erfindung können das erfindungsgemäße Verfahren und/oder die erfindungsgemäße Vorrichtung in einem Gerät zur Ausgabe, und insbesondere auch zur Zubereitung, eines milchhaltigen Getränkes, insbesondere eines milchhaltigen Kaffeegetränkes verwandt werden. Ein entsprechendes Gerät ist vorzugsweise als Kaffeevollautomat ausgebildet.

Nachfolgend wird die Erfindung unter Bezug auf die Zeichnung anhand eines Ausführungsbeispiels näher beschreiben. Es zeigt:
- Fig. 1: eine schematische Darstellung des Aufbaus einer ersten erfindungsgemäßen Vorrichtung zum Herstellen von Milch-Luft-Emulsionen, insbesondere von Milchschaum;
- Fig. 2: ein Diagramm, das eine Abhängigkeit zwischen der elektrischen Leitfähigkeit (Graph 30) und dem Luftanteil in Milch (Graph 50) und eine Temperaturkurve (Graph 40) darstellt.
- Fig. 3: eine Darstellung des Diagramms aus Fig. 3 mit einem Funktionsbereich;
- Fig. 4: eine Darstellung eines Funktionsbereichs hinsichtlich der prozentualen Öffnung des Luftdrosselventils;
- Fig. 5: eine Darstellung eines durch Selbstjustierung voreingestellten Funktionsbereichs;
- Fig. 6: eine Darstellung eines Grafikmenü-Bedienelements einer Vorrichtung zur Zubereitung eines koffeinhaltigen Getränks; und

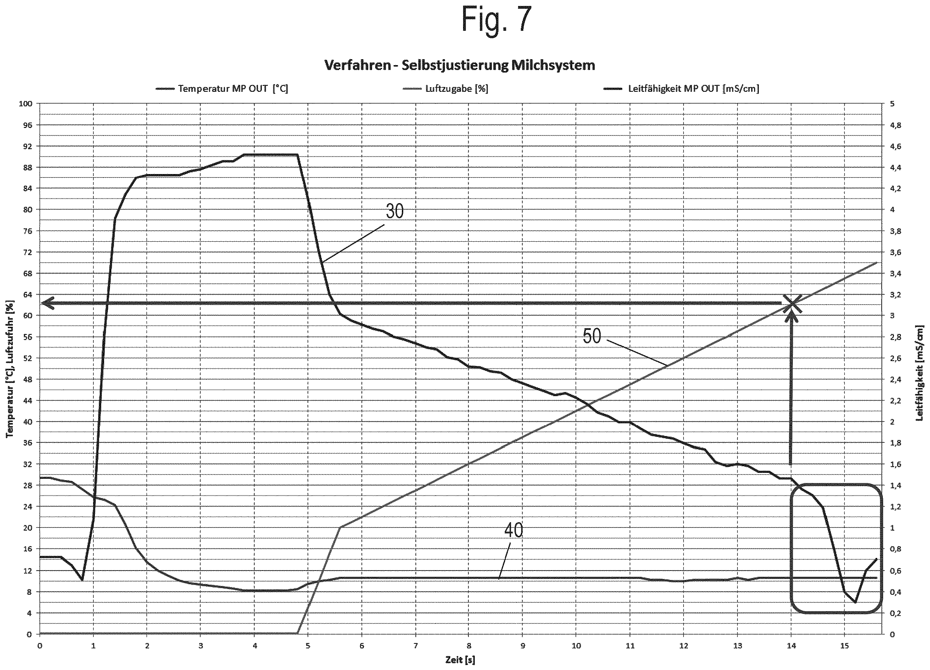

- Fig. 7: ein weiteres Diagramm nach Art der Fig. 2 und 3.

Vorstehend sowie im Folgenden werden die Begriffe "Milch-Luft-Gemisch" und "Milch-Luft-Emulsion" und "Milchschaum" synonym verwendet.

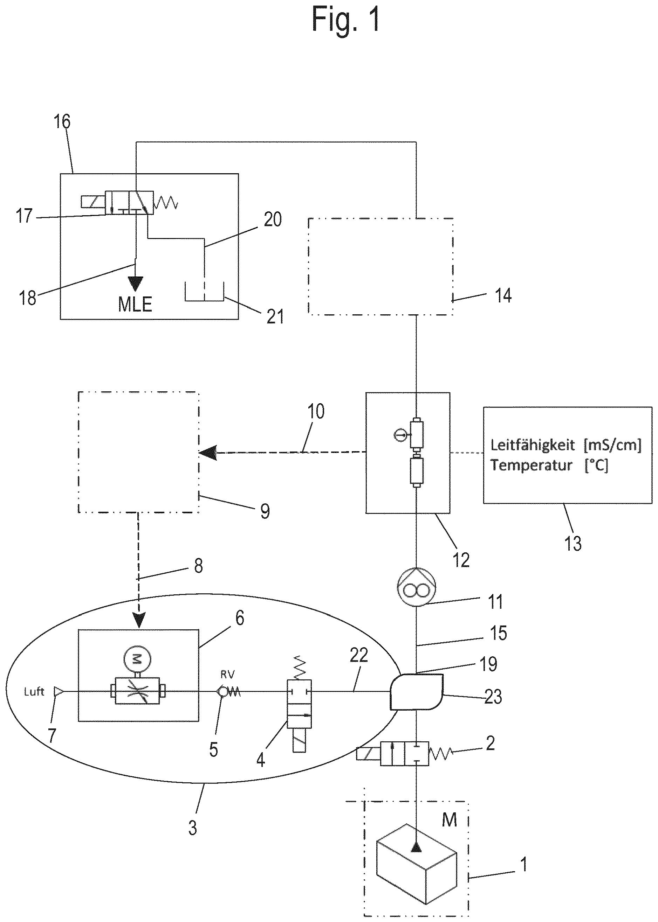

Fig. 1 zeigt eine Vorrichtung zur Erzeugung von Milchschaum. Diese weist hier folgenden beispielhaften Aufbau auf:
Eine Milchleitung 15 verbindet einen Milchbehälter 1 mit Milch M und eine Auslassvorrichtung 16 für eine Milch-Luft-Emulsion MLE miteinander. Die Auslassvorrichtung 16 ist als Auslauf ausgebildet, unter den ein Gefäß wie Tasse gestellt werden kann. Im Folgenden werden die Begriffe Auslassvorrichtung 16 und Auslauf synonym verwendet. Dabei sind in die Milchleitung 15 zwischen dem Milchbehälter 1 und der Auslassvorrichtung 16 in dieser Reihenfolge hier folgende Komponenten geschaltet: ein Absperrventil 2, eine Milchpumpe 11, ein Luftzuführsystem 3, eine Messeinheit 12, eine Verarbeitungseinrichtung 14.

Das Luftzuführsystem 3 weist eine Luftleitung 22 und ggf. eine Mischkammer 23 auf. In diese Mischkammer 23 wird die Milch über die Milchleitung 15 gefördert. Durch Lufteinleitung erfolgt ein Aufschäumen. Die Luftzufuhr kann mit einer Luftquelle 7 (z.B. eine Luftpumpe oder einen Druckbehälter oder einen nicht unter Druck stehenden Behälter oder durch eine Öffnung bzw. ein Leitungsende (saugend) mit der Umgebungsluft innerhalb oder außerhalb einer umgebenden Maschine) verbunden.

Zwischen der Mischkammer 23 und der Luftquelle 7 sind hier in oder an der Luftleitung 22 ein Rückschlagventil 5 und ein Absperrventil 2 geschaltet. Zudem ist entlang der Luftleitung zwischen dem Rückschlagventil 5 und der Luftquelle 7 eine Stelleinheit 6 angeordnet. Diese ermöglicht das Einstellen des Luftdrucks mit der die Luft durch die Luftleitung 22 in die Milch eingeblasen wird.

Weiterhin ist zwischen dem Rückschlagventil 5 und dem Einleitungsort 19 der Luft in die Milchleitung 15, hier im Bereich der Mischkammer 23, ein Absperrventil 4 vorgesehen.

Bei Lufteinleitung kann die Milch aufgeschäumt werden bzw. es kommt zur Ausbildung einer Milch-/Luftemulsion.

Die Stelleinheit 6 empfängt von einer Steuerungs- und Auswerteeinheit 9 einen Steuerbefehl, welcher über eine Signalleitung 8 an die Stelleinheit 6 übertragen wird. Die Signalleitung 8 kann beispielsweise als ein Kabel oder als eine drahtlose Verbindung ausgebildet sein.

Die Messeinheit 12 misst/ermittelt u.a. Messdaten zur Ermittlung einer physikalischen Stoffeigenschaft 13, bevorzugt die elektrische Leitfähigkeit und/oder die optische Materialeigenschaft und anderen Messgrößen wie z.B. die Temperatur.

Diese Stoffeigenschaft ändert sich mit der Qualität des Milchschaumes, insbesondere dem Verhältnis von Luft zu Milch pro Kubikzentimeter Milchschaum.

Eine solche physikalische Stoffeigenschaft 13 kann besonders bevorzugt die elektrische Leitfähigkeit sein. Der Wert der elektrischen Leitfähigkeit korreliert dem Anteil der Luft im Milchschaum. Neben der elektrischen Leitfähigkeit kann allerdings auch die thermische Leitfähigkeit, die Dichte und/oder die Viskosität ermittelt werden. Auch eine optische Materialeigenschaft, insbesondere der Brechungsindex, kann bestimmt werden. Hierfür weist die Messeinheit 12 vorzugsweise einen entsprechenden Sensor, z.B. einen Leitfähigkeitsmesszelle oder ein Refraktometer z.B. in einer Messzelle, auf. Weiterhin bevorzugt kann die Messeinheit 12 einen Temperatursensor zur Temperaturkompensation der ermittelten Leitfähigkeit aufweisen. Zudem kann bevorzugt und vorteilhaft eine Anpassung der Temperatur der Milch- bzw. der Milch-Luft-Emulsion auf einen Sollwert durch Regulierung der Menge an zugeführter Kaltluft und/oder durch Vorkühlung durch kalte Milch erfolgen.

Die Messeinheit 12 ist über eine Signalleitung 10, z.B. eine Kabelleitung oder eine drahtlose Datenleitung, mit der Steuerungs- und Auswerteeinheit 9 verbunden und gibt die Messwerte an diese Steuerungs- und Auswerteeinheit 9 weiter. Diese kann aus den Messdaten die entsprechende Stoffeigenschaft als ersten Istwert ermitteln und diese sodann mit einem vorgegebenen Sollwert eines Sollwertbereichs vergleichen.

Eine Verarbeitungseinrichtung 14 kann eine oder mehrere Erwärmungseinheiten zur direkten oder indirekten Erwärmung von Milch, z.B. durch Dampfeinleitung oder durch Erwärmung durch einen Wärmetauscher, aufweisen.

Nach einer Variante können heiße, warme und kalte Milch und /oder heißer, warmer und kalter Milchschaum ausgegeben werden (Temperaturabstufung heiß > warm > kalt).

Die Vorrichtung zur Erzeugung/Zubereitung von Milchschaum kann ein Teil eines übergeordneten Getränkeautomaten, beispielsweise eines Kaffeevollautomaten sein.

Nach einer Variante können beispielsweise in einen zunächst bereitgestellten Kaffee zwei verschieden temperierte Milchschäume gegeben oder es werden erst die zwei verschieden temperierten Milchschäume bereitgestellt und es wird dann ein Kaffee dazu gegeben. Dies können z.B. ein Top Foam (Warmmilchschaum), ein Heißmilchschaum und/oder ein Kaltmilchschaum sein.

Bei bekannten Kaffeevollautomaten ist die Konsistenz des Milchschaums, und hier in erster Linie die Ausbildung der Luftblasen, oftmals sehr unregelmäßig. Durch einen Homogenisator kann der erzeugte Milchschaums vorteilhaft vergleichmässigt werden.

Die meisten physikalischen Stoffeigenschaften sind temperaturabhängige Stoffeigenschaften. So ist beispielsweise die elektrische Leitfähigkeit abhängig von der Temperatur und dem Luftgehalt.

Sie eignet sich daher im Rahmen der Erfindung sehr gut als Mess- und Steuergröße zur Beeinflussung der Milchschaumeigenschaften.

Das vorbeschriebenen Luftzuführsystem 3 dient vorzugsweise zur Luftzuführung nach einem Verfahren mit den folgenden Schritten:
Die Drossel bzw. ein Luftdrosselventil ist dabei als eine Ausführungsvariante einer Stelleinheit 6 zu verstehen.

Der Öffnungsquerschnitt der Drossel kann erfindungsgemäß nach der Leitfähigkeit und/oder nach der gewünschten Temperatur des Milchschaumes eingestellt werden.

Eine Drossel, auch Luftdrosselventil genannt, die hinsichtlich der Größe ihres Öffnungsquerschnitts stufenlos, insbesondere mittels eines Elektromotors, einstellbar ausgebildet ist, wird im Folgenden als einstellbare Drossel bezeichnet.

Für die Einstellung des Öffnungsquerschnitts der einstellbaren Drossel kann bevorzugt ein Elektromotor verwendet werden. Eine einstellbare Drossel, wie sie in der vorliegenden Erfindung bevorzugt als Stelleinheit 6 vorgesehen sein kann, kann dabei auch eine quasi- stufenlose Einstellung aufweisen, die beispielsweise ein Schrittmotor ermöglicht wird.

Alternativ oder zusätzlich zur Steuerung der zugeführten Luftmenge kann die Steuerungs- und Auswerteeinheit 9 auch bevorzugt die Förder- und Pumpmenge der Milchpumpe 11 in Abhängigkeit der physikalischen Stoffeigenschaft, insbesondere elektrischen Leitfähigkeit, steuern. Auch dadurch ist die Konsistenz des Milchschaums veränderbar.

Durch die Verwendung einer einstellbaren Drossel als Stelleinheit in Kombination mit der Möglichkeit der Steuerung der verschiedenen Erwärmungseinheiten ist die zugeführte Luftmenge in Abhängigkeit einer physikalischen Stoffeigenschaft, insbesondere in Abhängigkeit von der Leitfähigkeit und der Temperatur des hergestellten Milch- Luft- Gemisches einstellbar.

Die Auslassvorrichtung 16 kann ein Umlenkventil 17 aufweisen, welches das Milch- Luft- Gemisch oder die Milch entweder zur Ausgabedüse 18 bestehend aus einer oder mehreren Ausgabedüsen oder einer Abflussleitung20 zur Entsorgung des Produkts in den Abfluss 21 transportiert.

Es kann auf die wesentlichen Faktoren oder eine Veränderung eines oder mehrere dieser Faktoren durch die Anpassung der Luftmenge, anhand eines vordefinierten Milch/ Luft-Verhältnisses, reagiert werden.

In der erfindungsgemäßen Vorrichtung der Fig. 1, welche das Milch/Luft-Verhältnis bestimmen und automatisch beeinflussen kann, kann die Luftzugabe, mit einem automatischen selbständigen Justierungsprozess, auf wesentliche Einflussfaktoren abgestimmt und er kann ein optimaler Bereich für die anschließende kundenspezifische Anpassung, ohne manuelles Eingreifen, automatisch definiert werden.

Die Vorrichtung der Fig. 1 weist zumindest zwei Betriebsmodi mit einem ersten Betriebsmodus zur Zubereitung eines Einzelgetränks bzw. eines produkt- und/oder nutzerindividuellen Milchschaumes auf. Weiter weist die Vorrichtung den zweiten Betriebsmodus auf welcher im Rahmen der vorliegenden Erfindung auch als Selbstjustierung bezeichnet wird.

Weitere Betriebsmodi - z.B. Reinigungsmodi - und dergleichen können selbstverständlich ebenfalls vorhanden sein.

Vorzugsweise werden die Betriebsmodi an einem Getränkeautomaten durch Bestätigung bzw. Betätigung eines Menüpunktes eines Auswahlmenüs oder durch andere Eingabe gestartet.

Die Ermittlung der optimalen Menge an Luft erfolgt durch die Messung der physikalischen Stoffeinheit durch die Messstelle 12 und zur Beeinflussung der Luftzugabe wird die Stelleinheit 6, vorzugsweise als motorisch stufenlos verstellbare Drossel, vorgesehen. Ziel ist ein Auffinden eines Luftzugabebereichs, innerhalb dessen ein weitgehend optimales Milch/Luft- Verhältnis hergestellt werden kann.

Im ersten Schritt wird Milch ohne Zugabe von Luft durch die Vorrichtung gefördert, z.B. um Spülwasser zu entsorgen, Komponenten zu kühlen, das Vorhandensein von Milch zu detektieren, die Milchsorte zu beurteilen und/oder resultierend stabile Ausgangsbedingungen für den nächsten Schritt zu schaffen.

Im zweiten Schritt wird Milch, mit entsprechender Produkt-Pumpendrehzahl der Milchpumpe 11, durch die Vorrichtung gefördert und zeitgleich wird die Luftzugabe automatisch erhöht. Das Milch/ Luft-Verhältnis wird während des Vorgangs kontinuierlich gemessen.

Ein vorteilhafter Parameter für eine Definition des Zugabebereichs ist die Luftzugabemenge (Öffnungsquerschnitt bzw. Position der Stelleinheit 6). Die Luftmenge (prozentuale Öffnung), bei der ein vordefiniertes Milch/ Luft-Verhältnis erreicht wird, dient als Orientierungswert für den Zugabebereich, in welchem das System folgend auf die kundenspezifischen Anforderungen angepasst werden kann. Das vordefinierte Milch/Luft-Verhältnis ist erreicht, wenn die Leitfähigkeitsmessung einen bestimmten Wert erreicht, welcher als Datensatz auf der Steuerungs- und Auswerteeinheit 9 hinterlegt sein kann.

Vorteilhaft kann weiter vorgesehen sein, dass zusätzlich zum Orientierungswert der Wert gespeichert wird, bei welchem eine Zubereitung auf Grund einer zu hohen Luftmengenzugabe nicht mehr möglich oder die Schaumqualität auf Grund zu großer Luftblasen nicht mehr akzeptabel ist. Im Verlaufsdiagramm stellt sich dieser Grenzwert als rapide/ steile Abnahme der Leitfähigkeit dar. Im angehängten Verlaufsdiagramm tritt dieser - ab einer Leitfähigkeit von 1,4 mS/cm bei 62% Luftzugabemenge (Sekunde 14) auf. Anhand dieser Werte kann der optimale Einstellbereich innerhalb des generellen Funktionsbereichs ergänzend klar definiert werden.

Durch die Selbstjustierung wird somit ein Zugabebereich für die zugeführte Luftmenge, insbesondere für die prozentuale Öffnung des Luftdrosselventils definiert, welcher als konstante Vorgabe für eine Mehrzahl nachfolgender Zubereitungsprozesse für Getränke genutzt wird.

Die Selbstjustierung wird nachfolgend anhand eines konkreten Beispiels nochmals im Detail erläutert.

Schritt i: Analyse der Milch. Nach Start der Selbstjustierung wird in einem ersten Schritt Milch ohne Luftzuführung, also bei einer Luftzugabe von 0%, durch die Vorrichtung gefördert. Dies kann beispielsweise bei einer Milchtemperatur in Umgebungstemperatur (z.B. 20°C) erfolgen. Die Leitfähigkeit kann zu Beginn des Schrittes i 0,7 mS/cm betragen.

Während des Schrittes i wird Milch aus einem Behälter gefördert. Dabei werden zugleich erwärmte Milch, Spülwasser und Lufteinschlüsse aus der Vorrichtung entfernt. Während dieses Zeitraums kann die Temperatur weiter beispielsweise auf 8°C absinken. Die Leitfähigkeit steigt an, bis ein annähernd konstanter Leitfähigkeitswert für die Milch (z.B. bei 4,5 mS/cm) eingestellt ist. Sofern konstante Bedingungen (Leitfähigkeit und ausreichende Temperatur der Milch und der Vorrichtung) eingestellt sind ist die Milchanalyse abgeschlossen.

Die Milchanalyse kann vorzugsweise weniger als 8 Sekunden, insbesondere weniger als 5 Sekunden betragen.

Schritt ii: Analyse von Milchschaum. Zunächst wird eine Luftzugabe aktiviert. Dabei wird die Drossel, insbesondere das Luftdrosselventil, geöffnet. Zunächst kann eine schnelle Öffnung, z.B. zu 20%, erfolgen. Die Temperatur kann sich gering, z.B. von 8°C auf 10°C erhöhen. Durch die Luftzufuhr sinkt die Leitfähigkeit, z.B. von 4,5 mS/cm auf 3,0 mS/cm.

Zusätzlich zum Umfang der Öffnung der Drossel kann auch die Pumpendrehzahl der Milchpumpe in Abhängigkeit von den Produkteinstellungen, also von der Art des Milchschaums, angepasst werden. Die Luftzugabe kann innerhalb eines bestimmten Bereichs iterativ, z.B. linear, erhöht werden. Dabei wird die Änderung des Milch-Luft-Verhältnisses durch die Leitfähigkeitsmessung während der Erhöhung der Luftzugabe ermittelt. Die Temperatur kann dabei konstant 10°C erhalten bleiben. Der Öffnungsgrad der Drossel kann sukzessive von 20% auf 70% erhöht werden. Die Leitfähigkeit kann sich dabei von 3,0 mS/cm auf 1,2 mS/cm verringern.

Nach Abschluss der Analyse des Milchschaums kann ein entsprechender Verlauf in einem Verlaufsdiagramm dargestellt werden, wobei Öffnungsgrad der Drossel gegenüber Leitfähigkeit als Datensatz bei einer entsprechenden Milchtemperatur hinterlegt werden kann.

Bei der Ausgabe des Milchschaumes kann die nunmehr ein Sollwert pro gewünschten Milchschaum vorgegeben werden. So kann z.B. ein Top Foam eine andere Leitfähigkeit aufweisen als ein Kaltmilchschaum. Je nach Getränke- und/oder Schaumauswahl kann ein Sollwertbereich entlang des Diagramms vorgegeben werden. Dies kann z.B. 2 mS/cm für Top Foam bei einer Milchtemperatur von 10°C betragen mit einer Varianz von 6%. Entsprechend kann der Sollwertbereich von 1,94 bis 2,06 µS/cm betragen und entsprechend kann der Öffnungsgrad der Drossel innerhalt eines Sollwertbereichs zwischen 40 bis 52 % für Top Foam gemäß des ermittelten Verlaufsdiagramms betragen.

Ein anderer Sollwertbereich kann für Kaltmilchschaum vorgegeben sein, z.B. ein Öffnungsgrad der Drossel zwischen 31 bis 43 %.

Die Selbstjustierung des jeweiligen Milchschaumprodukts (Heißmilchschaum, Kaltmilchschaum, Top Foam) kann durch das vorbeschriebene Vorgehen in Abhängigkeit der Milchtemperatur, der Milchsorte, aber auch der Ansaughöhe und den Aufstellbedingungen verbessert werden.

Die Durchführung ermöglicht beispielsweise auch eine Abstimmung der Luftzugabe bei Installation der Maschine und/oder die erneute Durchführung als Reaktion auf eine Veränderung der wesentlichen Einflussfaktoren, z.B. den Wechsel einer Milchsorte. Speziell die erneute Durchführung des Justierungsvorgangs, welche vom Kunden direkt ausgeführt werden kann, stellt eine deutliche Verbesserung dar, da somit ein Technikereinsatz zur erneuten Einstellung nach z.B. Wechsel der Milchsorte nicht notwendig ist. Des Weiteren werden die, bei der Justierung entstehenden, Milchverluste und der Zeitaufwand zur Justierung stark reduziert.

Die nachträgliche Feinjustierung kann im ermittelten Sollwertbereich auf die kundenspezifischen Anforderungen kann, auf Grund der motorisch stufenlosen Verstellung, über das Bedienelement erfolgen und somit auf eine Demontage von Bauteilen o.ä. verzichtet werden.

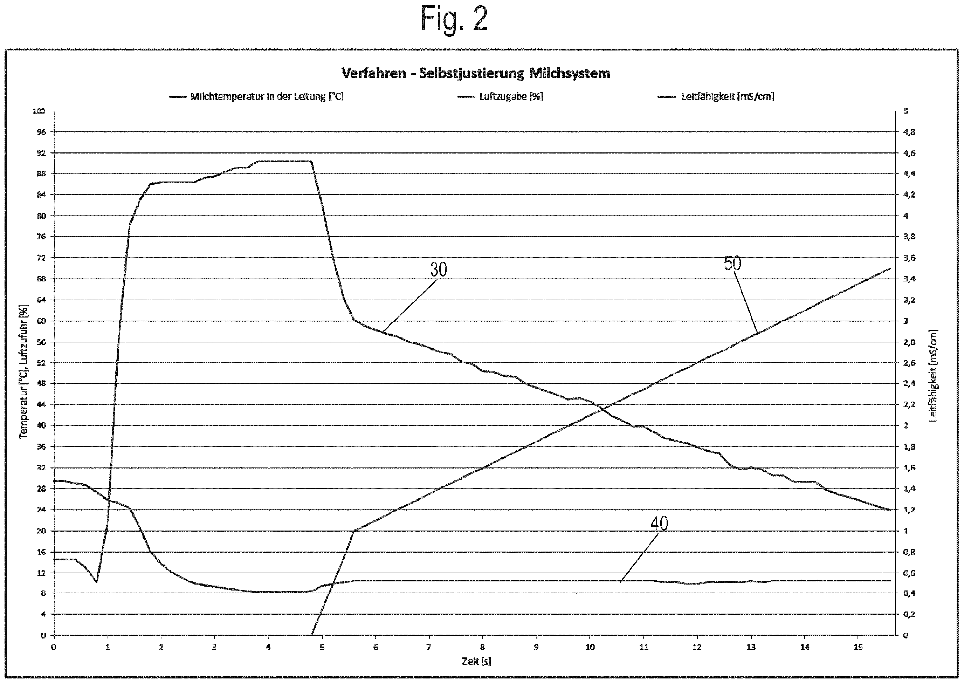

Fig. 2 stellt beispielhaft schematisch eine Abhängigkeit zwischen der elektrischen Leitfähigkeit (Graph 30) und dem Luftanteil in Milch bzw. dem Öffnungsgrad der Stelleinheit 6 hier in Form des Luftdrosselventils (Graph 50) (Milchsorte: Kuhmilch, 1,5% Fett, UHT) - hier beispielhaft innerhalb eines Zeitintervalls von 15 Sekunden - dar. Die Abkühlung der Vorrichtung durch die Zufuhr kalter Milch wird durch eine Temperaturkurve (Graph 40) dargestellt. Die Graphen entsprechen dabei den vorgenannten Verfahrensschritten i bis iii, wobei sich aus den Temperaturbereichen und der Luftzugabe ablesen lässt, welcher Verfahrensschritt zu welchem Zeitpunkt eingeleitet wird. Ideal für die vorliegende Milchsorte und das ausgewählte Milchschaumprodukt, z.B. Top Foam, ist in der Variante der Fig. 2 jedoch ein Sollwert von 2,3 mS/cm, was einem Öffnungsgrad des Luftdrosselventils von 46% entspricht. Ausgehend von diesem Öffnungsgrad können bspw. in einem Sollbereich von +/- 6% verschiedene Konsistenzen hergestellt werden. Dieser Sollbereich kann sich ebenfalls nach der verwendeten Milchsorte, der Temperatur der Emulsion und/oder weiteren Parametern richten.

In Fig. 1 ist gut eine Abhängigkeit der Leitfähigkeit von der Temperatur des Milchschaumes und von dem Luftanteil des Milchschaumes zu erkennen. Die primären Einflussfaktoren auf die Milchschaumeigenschaften (Qualität) und resultierend auf die Leitfähigkeit sind der Luftanteil und die Temperatur. Sekundäre Einflussfaktoren sind die Rahmen- / Aufstellbedingungen der Maschine z.B. geodätische Ansaughöhe, Leitungslängen sowie Milchsorte und Milchart, der indirekte Einfluss dieser Faktoren führt zu Schwankungen des optimalen Luftzugabebereich von Aufstellort zu Aufstellort und kann durch den zweiten Betriebsmodi automatisch kompensiert werden. Luftdruck, Temperatur und Zeitraum sind hingegen eher weniger geeignete aktive Stellgrößen während eines Bezugs, da Sie in der Regel entweder vorherrschend oder vorgegeben sind (Umgebungstemperatur beim Kunden, Temperatur und Position des Kühlschranks, Tassengröße). Eine Hauptstellgröße des Systems ist die Luftmengenzugabe über die Stelleinheit.

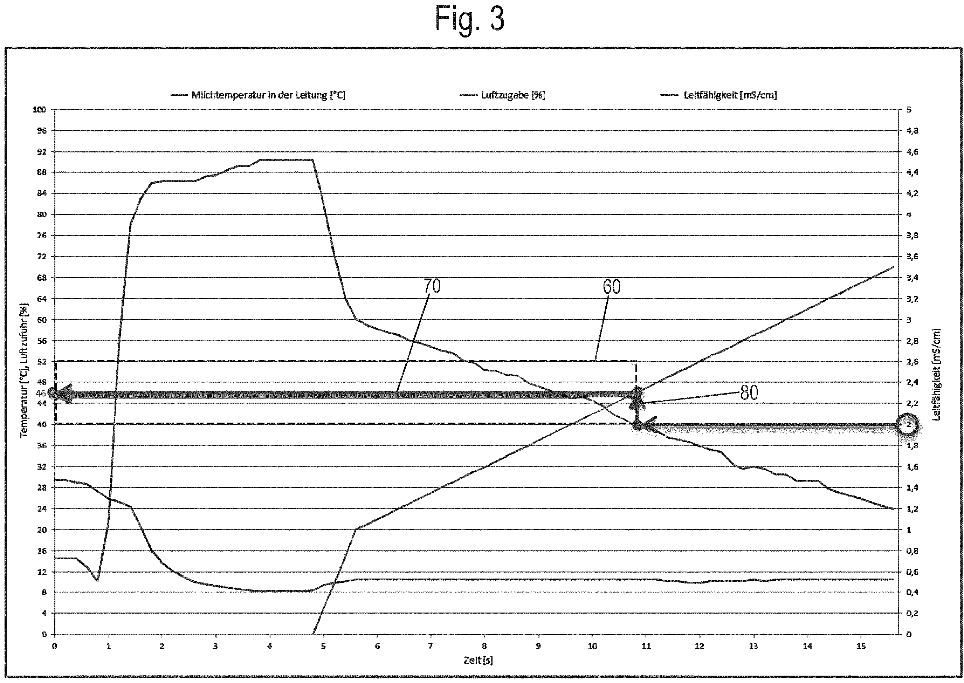

Konkret ist der vorgenannte Sollwertbereich in Fig. 3 dargestellt. Die Einstellung des Öffnungsgrads des Luftdrosselventils durch den Nutzer bei der Einzelgetränkezubereitung ist somit im ersten Betriebsmodus auf einen Bereich zwischen 40 bis 52 % beschränkt, wobei dem Nutzer der Öffnungsgrad von 46% als geeigneter Mittelwert für den Milchschaum seines ausgewählten Produktes vorgeschlagen wird.

Insgesamt kann während der Selbstjustierung der Fig. 1 die elektrische Leitfähigkeit von Milchschaum genutzt werden um diesen Milchschaum zu beurteilen und Grenzen zur Beeinflussung des Milchschaumes über die zugeführte Luftmenge durch den Nutzer bei Ausgabe eines Getränks festzulegen.

Ein zusätzlicher vorteilhaft zu berücksichtigender Parameter ist dabei die Temperatur. Denn die Leitfähigkeit des Milchschaumes ist insbesondere abhängig von der Milchsorte, der Milchtemperatur und dem Luftanteil. Mit der entsprechenden Messung und den Kenntnissen über die Leitfähigkeitscharakteristik verschiedener Milchsorten und Temperaturen, welche u.a. in Sollwert-Datensätzen berücksichtigt werden können, kann ein optimales Milch-zu Luftverhältnis für die weitere Verarbeitung im Prozess definiert und dieses beispielsweise über die automatische Regulierung der Luftzufuhr hergestellt werden. Die Luftmengen können während der Selbstjustierung und innerhalb des Sollwertbereichs auch während des ersten Betriebsmodus sogar dynamisch individuell reguliert werden. Die Regulierung kann sich automatisch den internen und externen Parametern anpassen, was eine Reaktion auf die Veränderungen der Betriebsbedingungen grundsätzlich ermöglicht und die Justierung und Kalibrierung des Systems stark vereinfacht. Veränderungen der Milchtemperatur können dabei in begrenztem Maße durch die Zufuhr an Luft kompensiert werden.

Die vorbeschriebenen eingesetzten Messeinheiten umfassen jeweils bevorzugt einen Leitfähigkeitssensor und einen Temperatursensor.

Besonders bevorzugt ist die erste Messeinheit 12 direkt druckseitig der Milchpumpe 11 angeordnet.

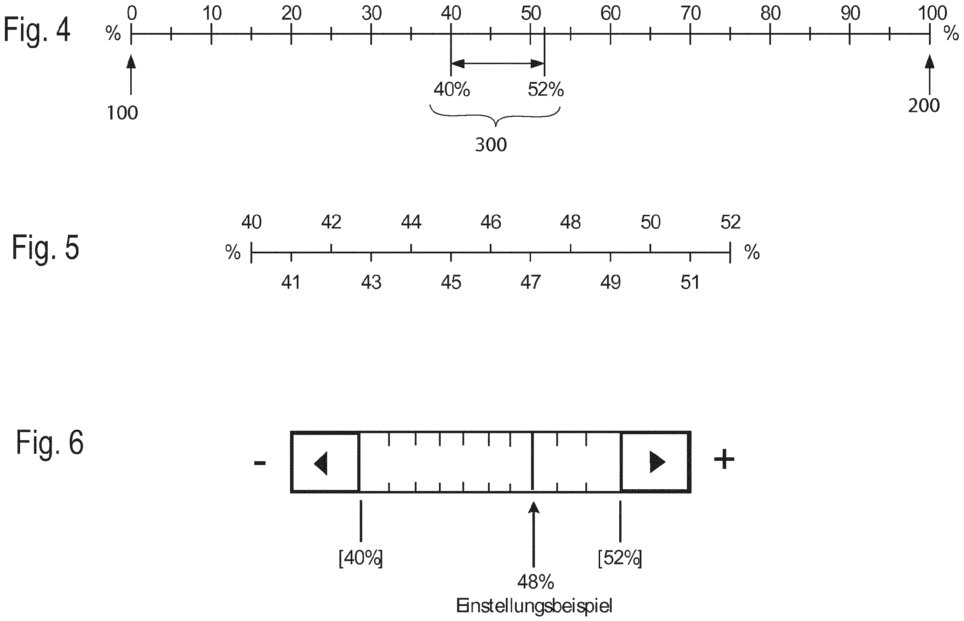

Fig. 4 zeigt eine Festlegung des Sollwertbereichs auf einer Skala des Öffnungsgrades. Dabei entspricht der Wert 100 einer 0%igen Öffnung des Luftdrosselventils, so dass keine Luft in die Milch eingeleitet wird. Der Wert 200 entspricht einer 100%igen Öffnung des Luftdrosselventils, so dass Luft mit hohem Druck in die Milch eingeleitet wird. Die Luftmenge ist dabei meist zu hoch zur Ausbildung einer mechanisch stabilen Luft-Milch-Emulsion.

Der Bereich 300 wurde durch die Selbstjustierung im zweiten Betriebsmodus der Vorrichtung durch schrittweise Öffnung des Ventils bei gleichzeitiger Leitfähigkeitsmessung und Temperaturmessung oder Temperaturüberwachung ermittelt.

Dieser Bereich 300 ist der optimale Sollwertbereich für den Milchschaum des jeweiligen vom Nutzer ausgewählten Produktes in Abhängigkeit von der verwendeten Milchsorte.

Fig. 5 ist eine grafische Vergrößerung des Bereichs 300 und Fig. 6 ist ein Bedienfeld zur Einstellung der Milchschaumqualität innerhalb des Bereichs 300 während der Milchschaumzubereitung nach der Auswahl eines Getränks durch den Nutzer im Rahmen einer Getränk-Einzelzubereitung.

**Bezugszeichenliste**

| | |
|---|---|
| Milchbehälter | 1 |
| Absperrventil | 2 |
| Luftzuführsystem | 3 |
| Absperrventil | 4 |
| Rückschlagventil | 5 |
| Stelleinheit | 6 |
| Luftquelle | 7 |
| Signalleitung | 8 |
| Steuerungs- und Auswerteeinheit | 9 |
| Signalleitung | 10 |
| Milchpumpe | 11 |
| Messeinheit | 12 |
| Physikalische Stoffeigenschaft | 13 |
| Verarbeitungseinrichtung | 14 |
| Milchleitung | 15 |
| Auslassvorrichtung | 16 |
| Ventil/Umlenkventil | 17 |
| Ausgabedüse | 18 |
| Einleitungsort | 19 |
| Abflussleitung | 20 |
| Abfluss | 21 |
| Lufteinleitung | 22 |
| Mischkammer | 23 |
| Milch | M |
| Milch-Luft-Emulsion | MLE |

## Patentansprüche

1. Verfahren zum Betrieb eines Geräts zum Bereitstellen einer Milch-Luft-Emulsion (MLE) wobei das Gerät zumindest aufweist:
a) eine von Milch durchflossene Milchleitung (15),
b) wenigstens ein Luftzuführsystem (3) mit einer Stelleinheit (6) zur Einstellung einer Luftzufuhrmenge zur Erzeugung einer Milch-Luft-Emulsion (MLE) aus der Milch (M),
c) zumindest eine Messeinheit (12) zur Ermittlung wenigstens einer physikalischen Stoffeigenschaft (13) der Milch-Luft-Emulsion (MLE), und
d) eine Steuerungs- und Auswerteeinheit (9), welche ausgerüstet ist zur Einstellung wenigstens einer Steuergröße,
e) wobei die Vorrichtung zumindest zwei Betriebsmodi aufweist,
f) wobei in einem ersten Betriebsmodus eine Ausgabe einer Milch-Luft-Emulsion (MLE) erfolgt,
g) wobei in dem ersten Betriebsmodus eine Zugabemenge an Luft in eine zugeführte Milch (M) eingeleitet wird, wobei die Steuerungs- und Auswerteeinheit (9) die Luftzugabemenge anhand eines Datensatzes einstellt, der beim Durchlaufen eines zweiten Betriebsmodus festgelegt worden ist,
h) wobei in dem zweiten Betriebsmodus im Rahmen einer Selbstjustierung ein Erstellen des Datensatzes unter Änderung der physikalischen Stoffeigenschaft (13) durch Änderung der zugeführten Luftmenge durch die Stelleinheit (6) erfolgt, und
i) wobei das Gerät im ersten Betriebsmodus eine Ausgabe eines Getränks mit einer Milch-Luft-Emulsion ermöglicht, wobei Schritt
i) **dadurch gekennzeichnet ist, dass** er die folgenden Schritte beinhaltet:
A) Vorgabe einer Milch-Luft-Emulsion (MLE) anhand einer manuellen Auswahl eines Getränks;
B) Ausführen des ersten Betriebsmodus unter Freischalten eines Bedienfeldes zur Sollwerteinstellung der Luftmenge innerhalb eines im zweiten Betriebsmodus eingestellten Sollwertbereichs; und
C) Ausgabe des Getränks mit der Milch-Luft-Emulsion (MLE).

2. Verfahren nach Anspruch 1, **dadurch gekennzeichnet, dass** der zweite Betriebsmodus zumindest folgende Schritte aufweist:
i) Analyse einer zugeführten Milch (M) zumindest anhand der physikalischen Stoffeigenschaft (13); wobei die Analyse der in Schritt i) zugeführten Milch (M) anhand einer Milchsortendatenbank erfolgt, wobei die Milchsorten als Datensatz auf dem Datenspeicher der Steuerungs- und Auswerteeinheit, vorzugsweise in Abhängigkeit der physikalischen Stoffeigenschaft (13) und der Temperatur der Milch (M), hinterlegt sind.
ii) wiederholtes Ausbilden einer Mich-Luft-Emulsion unter Veränderung einer in die Milch (M) eingeleiteten Luftmenge bei gleichzeitiger Ermittlung der Änderung der physikalischen Stoffeigenschaft (13); und
iii) Erstellen des Verlaufsdiagramms für die physikalische Stoffeigenschaft (13) in Abhängigkeit von der in Schritt ii) eingestellten Luftmenge.

3. Verfahren nach Anspruch 2, **dadurch gekennzeichnet, dass** die Ermittlung der physikalischen Stoffeigenschaft (13) in Schritt ii) in Abhängigkeit von der Temperatur der Luft-Milch-Emulsion (MLE) erfolgt.

4. Verfahren nach einem der vorhergehenden Ansprüche, **dadurch gekennzeichnet, dass** die Zuleitung der Luftmenge über die Stelleinheit (6), vorzugsweise durch ein motorisch stufenlos-einstellbares Luftdrosselventil, erfolgt, welches durch Einstellung des Sollwertbereichs einstellbar ist.

5. Verfahren nach einem der vorhergehenden Ansprüche, **dadurch gekennzeichnet, dass** vor der Analyse der zugeführten Milch (M) eine Spülung der Vorrichtung mit artgleicher Milch (M) zur Reinigung und/oder zur Vorkühlung einzelner Bauteile der Vorrichtung erfolgt.

6. Verfahren nach einem der vorhergehenden Ansprüche, **dadurch gekennzeichnet, dass** die physikalische Stoffeigenschaft (13) die elektrische Leitfähigkeit und/oder eine optische Materialeigenschaft, insbesondere der Brechungsindex, ist.

7. Verfahren nach einem der vorhergehenden Ansprüche, **dadurch gekennzeichnet, dass** der Wechsel zwischen dem ersten und dem zweiten Betriebsmodus durch ein manuelles Umschalten erfolgt.

8. Verfahren nach einem der vorhergehenden Ansprüche, **dadurch gekennzeichnet, dass** der Wechsel zwischen dem ersten und dem zweiten Betriebsmodus als Ergebnis einer Überwachung ausgelöst wird.

## Claims

1. Method of operating an apparatus for providing a milk-air emulsion (MLE), the apparatus at least comprising:
a) a milk line (15) through which milk flows,
b) at least one air feed system (3) having an adjusting unit (6) for setting an air feed amount for producing a milk-air emulsion (MLE) from the milk (M),
c) at least one measuring unit (12) for determining at least one physical material property (13) of the milk-air emulsion (MLE), and
d) a control and evaluation unit (9), which is designed for setting at least one control variable,
e) wherein the device has at least two operating modes,
f) wherein in a first operating mode, a milk-air emulsion (MLE) is dispensed,
g) wherein, in the first operating mode, an addition amount of air is introduced into a supplied milk (M), wherein the control and evaluation unit (9) sets the air addition amount on the basis of a data set which has been determined when passing through a second operating mode,
h) wherein in the second operating mode, in the context of a self-adjustment, the data set is created by changing the physical material property (13) by changing the supplied amount of air by means of the adjusting unit (6), and
i) wherein the apparatus, in the first operating mode, enables dispensing of a beverage comprising a milk-air emulsion, wherein step i) is **characterized in that**, that it includes the following steps:
A) presetting a milk-air emulsion (MLE) based on a manual selection of a beverage;
B) executing the first operating mode while enabling a control panel for setpoint adjustment of the amount of air within a setpoint range set in the second operating mode; and
C) dispensing of the beverage with the milk-air emulsion (MLE).

2. Method according to claim 1, **characterized in that** the second operating mode comprises at least the following steps:
i) analyzing a milk (M) supplied at least on the basis of the physical material property (13), wherein the analysis of the milk (M) supplied in step i) is carried out on the basis of a milk-type database, wherein the milk assortments are stored as a data set on the data memory of the control and evaluation unit, preferably as a function of the physical material property (13) and the temperature of the milk (M);
ii) repeatedly forming a milk-air emulsion while changing an amount of air introduced into the milk (M) while simultaneously detecting the change in the physical material property (13); and
iii) generating the progression diagram for the physical material property (13) as a function of the amount of air set in step ii).

3. Method according to claim 2, **characterized in that** the determination of the physical material property (13) in step ii) is carried out as a function of the temperature of the air-milk emulsion (MLE).

4. Method according to one of the preceding claims, **characterized in that** the feed of the amount of air is carried out via the adjusting unit (6), preferably by means of a motor-driven continuously adjustable air throttle valve, which can be adjusted by setting the setpoint range.

5. Method according to one of the preceding claims, **characterized in that,** prior to the analysis of the supplied milk (M), the device is rinsed with milk of the same type (M) for cleaning and/or for pre-cooling individual components of the device.

6. Method according to one of the preceding claims, **characterized in that** the physical material property (13) is the electrical conductivity and/or an optical material property, in particular the refractive index.

7. Method according to one of the preceding claims, **characterized in that** the change between the first and the second operating mode is performed by manual switching.

8. Method according to one of the preceding claims, **characterized in that** the change between the first and the second operating mode is triggered as a result of monitoring.

## Revendications

1. Procédé pour le fonctionnement d'un appareil destiné à préparer une émulsion de lait et d'air (MLE), lequel appareil comprend au moins :
a) une conduite de lait (15) parcourue par du lait
b) au moins un système d'arrivée d'air (3) avec une unité de régulation (6) destinée à régler une quantité d'air amenée pour créer une émulsion de lait et d'air (MLE) à partir du lait (M),
c) au moins une unité de mesure (12) pour déterminer au moins une propriété physique de matière (13) de l'émulsion de lait et d'air (MLE), et
d) une unité de commande et d'analyse (9) équipée pour régler au moins une grandeur de commande,
e) dans lequel le dispositif présente au moins deux modes de fonctionnement,
f) dans lequel, dans un premier mode de fonctionnement, une émulsion de lait et d'air (MLE) est délivrée,
g) dans lequel, dans le premier mode de fonctionnement, une quantité ajoutée d'air est introduite dans un lait (M) amené, l'unité de commande et d'analyse (9) réglant la quantité d'air ajoutée à l'aide d'un ensemble de données qui a été défini pendant l'exécution d'un deuxième mode de fonctionnement,
h) dans lequel, dans le deuxième mode de fonctionnement, l'ensemble de données est créé au cours d'un auto-ajustement en modifiant la propriété physique de matière (13) par la modification par l'unité de régulation (6) de la quantité d'air amenée, et
i) dans lequel l'appareil permet, dans le premier mode de fonctionnement, la délivrance d'une boisson contenant une émulsion de lait et d'air, l'étape i) étant **caractérisée en ce qu'**elle comprend les étapes suivantes :
A) spécification d'une émulsion de lait et d'air (MLE) à l'aide d'un choix manuel d'une boisson ;
B) exécution du premier mode de fonctionnement avec déblocage d'un champ de commande pour le réglage de la valeur de consigne de la quantité d'air dans une plage de valeurs de consigne réglée dans le deuxième mode de fonctionnement et
C) délivrance de la boisson contenant l'émulsion de lait et d'air (MLE).

2. Procédé selon la revendication 1, **caractérisé en ce que** le deuxième mode de fonctionnement comprend au moins les étapes suivantes :
i) analyse d'un lait (M) amené à l'aide au moins de la propriété physique de matière (13), l'analyse du lait (M) amené dans l'étape i) étant effectuée à l'aide d'une banque de données de types de lait, les types de lait étant mémorisés sous la forme d'ensembles de données dans la mémoire de données de l'unité de commande et d'analyse, de préférence en fonction de la propriété physique de matière (13) et de la température du lait (M) ;
ii) formation itérative d'une émulsion de lait et d'air avec modification d'une quantité d'air introduite dans le lait (M) et détermination concomitante du changement de la propriété physique de matière (13) et
iii) création du diagramme d'évolution de la propriété physique de matière (13) en fonction de la quantité d'air réglée dans l'étape ii).

3. Procédé selon la revendication 2, **caractérisé en ce que** la propriété physique de matière (13) est déterminée dans l'étape ii) en fonction de la température de l'émulsion de lait et d'air (MLE).

4. Procédé selon l'une des revendications précédentes, **caractérisé en ce que** la quantité d'air est amenée via l'unité de régulation (6), de préférence via une soupape d'étranglement d'air réglable en continu par un moteur, qui peut être réglée par l'ajustement de la plage de valeurs de consigne.

5. Procédé selon l'une des revendications précédentes, **caractérisé en ce que** le dispositif est rincé, avant l'analyse du lait (M) amené, avec du lait (M) du même type, pour le nettoyage et/ou le refroidissement préalable de différents composants du dispositif.

6. Procédé selon l'une des revendications précédentes, **caractérisé en ce que** la propriété physique de matière (13) est la conductivité électrique et/ou une propriété optique du matériau, en particulier l'indice de réfraction.

7. Procédé selon l'une des revendications précédentes, **caractérisé en ce que** l'alternance entre le premier mode de fonctionnement et le deuxième est réalisée par une commutation manuelle.

8. Procédé selon l'une des revendications précédentes, **caractérisé en ce que** le déclenchement de l'alternance entre le premier mode de fonctionnement et le deuxième est le résultat d'une surveillance.
